# EUROPÄISCHE PATENTSCHRIFT

(11) **EP 4 476 466 B1**
(45) Veröffentlichungstag und Bekanntmachung des Hinweises auf die Patenterteilung: **05.08.2026**
(21) Anmeldenummer: 23707872.0
(22) Anmeldetag: 09.02.2023
(51) Int. Cl.: F16D 3/18, F16D 3/78, B61C 9/44

(54) **DUALES KUPPLUNGSSYSTEM FÜR DEN ANTRIEB VON SCHIENENFAHRZEUGEN**
DUAL COUPLING SYSTEM FOR DRIVING RAIL VEHICLES
SYSTÈME DE DOUBLE COUPLAGE POUR L'ENTRAÎNEMENT DE VÉHICULES FERROVIAIRES

(30) Priorität: 10.02.2022 DE 202022100767 U
(43) Veröffentlichungstag der Anmeldung: 18.12.2024
(73) Patentinhaber: KWD Kupplungswerk Dresden GmbH, 01159 Dresden (DE)
(72) Erfinder: HÄHNEL, Thomas, 01723 Wilsdruff (DE)
(74) Vertreter: Rauschenbach, Marion
(86) Internationale Anmeldenummer: PCT/EP2023/053215
(87) Internationale Veröffentlichungsnummer: WO 2023/152231

(56) Entgegenhaltungen:
- DE-A1- 102005 017 819
- DE-U1- 29 803 149
- GB-A- 600 389

## Beschreibung

Die vorliegende Erfindung bezieht sich auf das technische Gebiet der Antriebs- und Getriebetechnik und betrifft ein duales Kupplungssystem, das in Schienenfahrzeugen, wie beispielsweise Zügen oder Straßenbahnen, eingesetzt werden kann.

Kupplungen sind aus dem Stand der Technik hinlänglich bekannt. Sie dienen zur Übertragung von Drehmomenten von einer Welle auf eine andere. Solche Kupplungen können beispielsweise starre oder elastische Kupplungen bzw. schaltbare oder nichtschaltbare Kupplungen sein. Kupplungen ermöglichen eine starre, drehstarre, elastische, drehelastische und/oder bewegliche Verbindung zweier Wellen, wobei durch die Kupplungen Drehmomentstöße und/oder Winkelfehler zwischen den Wellen ausgeglichen werden können.

Derartige Kupplungen werden unter anderem in Antriebssträngen von Fahrzeugen, wie PKW, LKW, Nutzfahrzeugen, Bussen oder auch Schienenfahrzeugen eingesetzt. Sie sind dabei in den Triebverbindungen zwischen einem Antriebsaggregat, beispielsweise einem Motor, und einer Arbeitsmaschine angeordnet.

Aus dem Stand der Technik sind bei der Ausgestaltung von Kupplungen verschiedene Lösungen bekannt.

Aus der EP 1 940 667 B1 ist eine kardanische Doppelgelenkkupplung für Schienenfahrzeuge mit zwei Gelenkebenen bekannt, die zwei Kupplungsgelenke, die zur Drehmomentübertragung durch eine Ritzelhohlwelle über eine von der Ritzelhohlwelle umschlossene Welle miteinander verbunden sind, enthält. Die eine Gelenkebene ist einem Kupplungsgelenk mit Balligverzahnung mit winkligem und axialem Ausgleichsvermögen und die andere Gelenkebene einem drehsteifen, biegeelastischen Kupplungsgelenk zugeordnet. Das Kupplungsgelenk mit Balligverzahnung weist eine tauschbare Hülse mit Innenverzahnung und eine tauschbare Kupplungsnabe mit dazu gehöriger Außenverzahnung auf, wobei die als Zwischenwelle ausgebildete Welle endbereichsseitig mit der tauschbaren Kupplungsnabe verbunden ist und wobei die Ritzelhohlwelle außerhalb der tauchbaren Hülse an der Außenwandung der Hülse befestigt ist.

Aus der DE 10 050 757 A1 ist eine Antriebseinheit für Schienenfahrzeuge mit einem Fahrzeugrahmen, einem Getriebe und einem kardanisch wirkenden Kupplungssystem bekannt, wobei das Kupplungssystem zwischen einer Radsatzwelle und dem Getriebe angeordnet ist. Ein erster Teil des Kupplungssystems in Form einer Bogenzahnkupplung ist in das Abtriebszahnrad des Getriebes und in dessen Schmierölkreislauf integriert, wobei zwischen Getriebe und Radsatz ein abtriebsseitiger zweiter Teil des Kupplungssystems vorgesehen ist.

Die DE 298 03 149 U1 offenbart eine Antriebseinheit für Schienenfahrzeuge, bei der zwischen einem Getriebe und einer Hohlwelle, durch die eine Radsatzwelle geführt ist, ein erster Teil einer Bogenzahnkupplung vorhanden ist, und bei der zwischen der Hohlwelle und dem Radsatz ein zweiter Teil der Bogenzahnkupplung vorgesehen ist.

Aus der GB 600 389 A ist ein einzelner Antrieb für eine Achse mit Kardanwelle und Getriebe für elektrisch angetriebene Fahrzeuge bekannt, der zwei unterschiedliche Kardanvorrichtungen umfasst, die jeweils an einem Ende der Kardanwelle befestigt sind. Eine Kardanvorrichtung besteht aus einem Element mit Antriebsarmen, die mit Mitteln zusammenwirken, die mit einem Zahnrad drehfest verbunden sind und in einem Ölbad rotieren, während die andere Kardanvorrichtung aus einer elastischen Kupplung besteht, die keinerlei Schmierung erfordert.

Weiterhin ist aus der DE 10 2005 017 819 A1 eine Rutschkupplung für zumindest ein Laufrad eines gleisgebundenen Triebfahrzeugs bekannt, bei der ein Laufrad an einer Welle befestigt ist und durch einen Motor angetrieben wird und bei der die Rutschkupplung ringförmige gegenüberstehende Außenbacken aufweist. Die Außenbacken der Rutschkupplung werden aus einem Teil des Laufrads und einem Anpressring gebildet, wobei der Anpressring fest mit dem Laufrad verbunden ist und ein Klemmring zwischen dem Anpressring und dem Teil des Laufrads eingeklemmt ist.

Nachteilig bei den aus dem Stand der Technik bekannten Lösungen ist, dass die vorgeschlagenen Kupplungssysteme einen großen Bauraum bei geringer Stützweite aufweisen. Auch ist nachteilig, dass bekannte Kupplung nur ungenügend Winkel - und Axialverlagerungen zwischen Antriebeinheit und Radsatz ausgleichen und bei der Wartung und Instandsetzung kosten- und zeitintensiv sind.

Die Aufgabe der vorliegenden Erfindung besteht in der Angabe eines Kupplungssystems, das einen geringen Bauraum bei verbesserter Stützweite und ein verbessertes Ausgleichverhalten bei auftretenden Axial- und Winkelverlagerungen ermöglicht und das kosten- und zeitgünstig gewartet und instandgesetzt werden kann.

Die Aufgabe wird mit den technischen Merkmalen gemäß Anspruch 1 gelöst. Vorteilhafte Ausgestaltungen sind Gegenstand der Unteransprüche, wobei die Erfindung auch Kombinationen der einzelnen abhängigen Ansprüche im Sinne einer Und-Verknüpfung einschließt, solange sie sich nicht gegenseitig ausschließen.

Gelöst wird die Aufgabe durch ein duales Kupplungssystem für den Antrieb von Schienenfahrzeugen, aufweisend eine einem Antriebsaggregat zugeordnete und Axialverlagerungen und Winkelversatz ausgleichende erste Kupplungseinheit, eine einem Getriebeaggregat zugeordnete und Winkelversatz ausgleichende zweite Kupplungseinheit, und eine zwischen der ersten und zweiten Kupplungseinheit angeordnete und mindestens einteilig ausgebildete Verbindungswelle, wobei die erste Kupplungseinheit form- und/oder kraftschlüssig über eine Nabe mit einer Antriebswelle verbunden ist, wobei die Nabe eine ballige Außenverzahnung aufweist, die mit einer Innenverzahnung einer Hülse in Eingriff steht, wobei die Hülse in einem ersten Endbereich mit der Verbindungswelle kraft- und oder formschlüssig lösbar verbunden ist, und wobei die zweite Kupplungseinheit gegenüberliegend der ersten Kupplungseinheit in einem zweiten Endbereich der Verbindungswelle angeordnet und mit dieser kraft- und/oder formschlüssig lösbar verbunden ist, wobei die zweite Kupplungseinheit ein zur ersten Kupplungseinheit gerichtetes Koppelelement aufweist, das ein Anordnen und Koppeln eines Getriebeaggregates im Bereich der Verbindungswelle zwischen der ersten und zweiten Kupplungseinheit ermöglicht.

Vorteilhafterweise ist die erste Kupplungseinheit eine Zahnkupplung, und ebenfalls vorteilhafterweise ist die zweite Kupplungseinheit eine Ringscheibenkupplung, eine Keilpaketringkupplung, ein Keilpaketkupplung, eine Laschenkupplung, eine Lenkerkupplung oder Stahl-Lamellenkupplung.

In einer vorteilhaften Ausgestaltung des dualen Kupplungssystems ist ein Freiraum zwischen Nabe und balliger Außenverzahnung ausgebildet, wobei besonders vorteilhaft im ausgebildeten Freiraum ein Abdichtelement angeordnet ist.

In einer besonders vorteilhaften Ausgestaltung ist das Abdichtelement im Freiraum mittig im Bereich der Zahnmittenebene der in Eingriff stehenden balligen Außenverzahnung angeordnet. Und zudem ist es von Vorteil, wenn das Abdichtelement ein Elastikelement oder Wellrohr ist, dass form-, stoff- und/oder kraftschlüssig mit der Hülse und der Nabe verbunden ist.

Vorteilhafterweise ist die Hülse mit dem ersten Endbereich der Verbindungswelle durch eine Stirnverzahnung und/oder eine Flanschverbindung verbunden.

Ebenfalls vorteilhafterweise ist die zweite Kupplungseinheit durch ein zentrales Verbindungselement mit der Verbindungswelle verbunden.

In einer vorteilhaften Ausgestaltung weist die erste Kupplungseinheit mindestens ein Sicherungselement auf, das zwischen Nabe und Antriebswelle angeordnet ist, wobei besonders vorteilhaft das Sicherungselement als Überlastbuchse ausgebildet ist und mittels Pressverband mit der Nabe und Antriebswelle verbunden ist.

Außerdem ist es von Vorteil, wenn im Bereich der Flanschverbindung und/oder in der Nabe mindestens ein elektrisches Isolationselement vorgesehen ist.

Und auch ist es von Vorteil, wenn die Verbindungswelle integraler Bestandteil der zweiten Kupplungseinheit ist, wobei der erste Endbereich der Verbindungswelle kraftund/oder formschlüssig mit der ersten Kupplungseinheit über die Hülse und/oder mit dem Flansch der Flanschverbindung verbunden ist.

Mit der vorliegenden Lösung wird ein verbessertes duales Kupplungssystem für den Antrieb von Schienenfahrzeugen bereitgestellt, das in der Montage, Wartung und Instandsetzung zeitsparend und kostengünstig ist und zudem einen geringen Bauraum bei verbesserter Stützweite und einem verbesserte Ausgleichverhalten bei auftretenden Axial- und Winkelverlagerungen ermöglicht.

Die technischen Vorteile des vorgeschlagenen dualen Kupplungssystems werden dadurch erreicht, indem zwei unterschiedlichen Kupplungseinheiten vorhanden sind, die mittels einer Verbindungswelle verbunden sind und jeweils ein unterschiedliches Ausgleichverhalten von auftretendem Winkel- und Axialversatz aufweisen. Die erste Kupplungseinheit ist einem Antriebsaggregat zugeordnet und ermöglicht insbesondere, axiale Verlagerungen auszugleichen. Die zweite Kupplungseinheit ist einem Getriebeaggregat zugeordnet und gegenüberliegend der ersten Kupplungseinheit am zweiten Ende der Verbindungswelle angeordnet. Die zweite Kupplungseinheit ist als eine Kupplung ausgebildet, die insbesondere, aber nicht ausschließlich, auftretenden Winkelversatz kompensiert. Als duales Kupplungssystem vereinen sie den technischen Vorteil, dass bei auftretendem Winkel- und Axialversatz zudem ein verbessertes radiales Ausgleichsvermögen bereitgestellt wird.

Die erste Kupplungseinheit weist eine form- und/oder kraftschlüssig auf einer Antriebswelle angeordnete Nabe auf, der zur Übertragung eines Drehmomentes und zum Ausgleich eines auftretenden Axialversatzes eine ballige Außenverzahnung aufweist.

Erfindungsgemäß steht die ballige Außenverzahnung der ersten Kupplungseinheit mit einer Innenverzahnung einer Hülse in Eingriff, wobei für eine kosten- und zeitgünstige Montage oder Demontage der ersten Kupplungseinheit die Hülse mit der ein- oder auch mehrteilig ausgebildeten Verbindungswelle über eine Flanschverbindung lösbar verbundenen ist.

Die spezielle Anordnung der ersten Kupplungseinheit auf der Antriebsseite hat den technischen Vorteil und synergetischen Effekt, dass die erste Kupplungseinheit aufgrund der geringen radialen Ausdehnung der Hülse mindestens teilweise in den Bauraum des Antriebsaggregates integriert werden kann. Der durch die Integration eingesparte Bauraum des dualen Kupplungssystems ermöglicht eine größere Stützweite der Verbindungswelle, mit der ein verbessertes radiales Ausgleichsverhalten zwischen Antriebs- und Getriebeaggregat ermöglicht wird.

Erfindungsgemäß ist die zweite Kupplungseinheit gegenüberliegend der ersten Kupplungseinheit am zweiten Ende der Verbindungswelle angeordnet und mit dieser kraft- und/oder formschlüssig lösbar verbunden. Die zweite Kupplungseinheit ist einem Getriebeaggregat zugeordnet und als Winkelversatz ausgleichende Kupplung ausgebildet. Derartige Kupplungseinheiten können vorteilhafterweise eine Ringscheibenkupplung, eine Keilpaketringkupplung, eine Keilpaketkupplung, eine Laschenkupplung oder eine Stahl-Lamellenkupplung sein.

Der wesentliche Vorteil, die zweite Winkelversatz ausgleichende Kupplungseinheit auf der Getriebeseite anzuordnen, besteht darin, dass durch die scheibenartig ausgebildete zweite Kupplungseinheit ein exponierter axialer Überhang neben dem Getriebeaggregat, wie er beispielsweise durch eine Hülse der ersten Kupplungseinheit entstehen würde, vermieden wird.

Für eine kompaktere Bauweise und optimale Gewichtsverteilung ist erfindungsgemäß vorgesehen, dass die zweite Kupplungseinheit ein zur ersten Kupplungseinheit gerichtetes und sternförmig ausgebildetes Koppelelement aufweist, über das das Getriebeaggregat im Bereich der Verbindungswelle zwischen der ersten und zweiten Kupplungseinheit gekoppelt werden kann. Das Koppeln des Getriebeaggregates mit dem Koppelelement kann beispielsweise über eine Stirnverzahnung erfolgen.

In einer vorteilhaften Ausgestaltung des Kupplungssystem kann vorgesehen sein, dass zwischen Nabe und balliger Außenverzahnung ein Freiraum ausgebildet ist.

Der ausgebildete Freiraum eröffnet die Möglichkeit, vorteilhafterweise ein Abdichtelement anzuordnen, mit dem insbesondere das Eindringen von unerwünschten Verunreinigungen im Bereich des Eingriffs von balliger Außen- und Innenverzahnung innerhalb der Hülse verhindert.

Dabei ist das Abdichtelement derart im ausgebildeten Freiraum angeordnet, dass ein abdichtender Kontakt mit der Innenwandung der Hülse sowie der Nabe realisiert ist. Das Abdichtelement kann in den Freiraum in einfacher eingesetzt und bei Verschleiß kosten- und zeitgünstig ersetzt werden.

Von besonderem Vorteil ist es, wenn das Abdichtelement im Bereich der Zahnmittenebene der in Eingriff stehenden balligen Außenverzahnung angeordnet ist.

Eine mittennahe Anordnung des Abdichtelementes im Bereich der Zahnmittenebene der in Eingriff stehenden balligen Außenverzahnung hat den synergetischen Effekt, dass das Abdichtelement bei auftretender Winkelverlagerung geringer beansprucht wird, woraus sich ein geringerer Verschleiß ergibt und dadurch eine längere Standzeit des Abdichtelementes ermöglicht wird. Besonders vorteilhaft kann das Abdichtelement ein Elastikelement oder ein Metallbalg in Form eines Wellrohres sein, das im ausgebildeten Freiraum fixierbar ist.

Ein weiterer wesentlicher Vorteil des im ausgebildeten Freiraum angeordneten Abdichtelementes besteht darin, dass eine besonders beständige und dauerhafte Abdichtung erreicht und eine Schmiermittelleckage verhindert wird. Zudem erlaubt das vorgesehene Abdichtelement den Einsatz niedrig viskoser Schmiermittel, die zudem in einfacher Weise dem hermetisch ausgebildeten Freiraum zugeführt werden können.

In einer weiteren vorteilhaften Ausgestaltung kann vorgesehen sein, dass zwischen der Nabe und der Antriebswelle ein Sicherungselement vorhanden ist. Ein derartiges Sicherungselement kann beispielsweise eine Überlastbuchse oder Rutschbuchse sein, um eine Überlastung und Versagen der ersten Kupplungseinheit zu vermeiden.

Um eine elektrische Entkoppelung von Antriebsaggregat und Getriebeaggregat zu ermöglichen, kann vorteilhafterweise eine elektrische Isolierung vorgesehen sein. Eine kostengünstige Lösung der elektrischen Isolierung kann dabei mit im Verbindungsbereich von Flansch und Hülse angeordneten elektrischen Isolationselementen erreicht werden. Die elektrische Isolierung kann beispielsweise durch elektrisch isolierende Elemente erreicht werden, die innerhalb der Flanschverbindung der kraftschlüssigen Verbindung zur Hülse vorgesehen sind.

Alternativ ist auch vorstellbar, mindestens ein elektrisches Isolationselement in der Nabe der ersten Kupplungseinheit vorzusehen. In diesen Fall kann vorgesehen sein, dass die Nabe radial mehrteilig ausgebildet ist und die elektrische Isolation zwischen den Teilen der Nabe als eine Art Isolationsbuchse angeordnet ist.

Eine besonders wartungs- und montagefreundliche Ausgestaltung des dualen Kupplungssystem ergibt sich dann, wenn vorteilhafterweise die Verbindungswelle direkt integraler Bestandteil der zweiten Kupplungseinheit ist.

Unter einem integralen Bestandteil der zweiten Kupplungseinheit soll im Rahmen der Erfindung verstanden werden, dass sich die Verbindungswelle aus der zweiten Kupplungseinheit erstreckt und Bestandteil dieser ist, ohne dass dabei eine zusätzliche Verbindungsstelle und/oder zentrales Verbindungselement und/oder Verzahnung im Bereich der zweiten Kupplungseinheit erforderlich ist.

Mit dem erfindungsgemäßen dualen Kupplungssystem werden mehrere technische Vorteile und synergetische Wirkungen erreicht.

Neben den Vorteilen einer hohen Dauerfestigkeit und Standfestigkeit wird auch ein geringerer erforderlicher Bauraum ermöglicht.

Durch die konkrete Anordnung der einem Antriebsaggregat zugeordneten ersten Kupplungseinheit mit balliger Außenverzahnung, z.B. einer Zahnkupplung, und der nachfolgend einem Getriebeaggregat zugeordneten zweiten Kupplungseinheit, z.B. eine Lamellenkupplung, wird eine größere Stützweite zwischen Antriebs- und Getriebeseite bereitgestellt, die insbesondere ein wesentlich besseres Ausgleichverhalten von Winkelversatz und Axialverlagerung und daraus auch radialem Versatz von Antriebs- und Getriebeaggregat beim dualen Kupplungssystem ermöglicht.

Die Erfindung eröffnet zudem die Möglichkeit, dass eine problemlose einfache und freie Tauschbarkeit der einzelnen Elemente des gesamten dualen Kupplungssystems gewährleistet werden kann und dadurch Zeit- und Kostenaufwand bei der Wartung verringert werden. Zudem bietet die konkrete Ausgestaltung der ersten Kupplungseinheit die Möglichkeit, mit einer genau positionierten Anordnung des Abdichtelementes im Freiraum zwischen Hülse und balliger Außenverzahnung und besonders vorteilhaft im Bereich der Zahnmittenebene der in Eingriff stehenden balligen Außenverzahnung die Standzeit des Abdichtelementes zu verbessern und damit ein sicheres und langlebiges Abdichtsystem bereitzustellen.

Die konkrete Anordnung und Zuordnung von antriebsseitiger erster und getriebeseitiger zweiter Kupplungseinheit bieten bei der Gestaltung und Auslegung des dualen Kupplungssystems mehrere Vorteile und Alternativen.

Mit der Anordnung der Winkel- und Axialversatz ausgleichenden ersten Kupplungseinheit auf der Antriebsseite lässt sich eine wesentlich kompaktere Bauweise erzielen und damit Bauraum einsparen.

Alternativ besteht die Möglichkeit, den eingesparten Bauraum zugunsten einer vergrößerten Stützweite zu nutzen, was wiederum zu einem weiter verbesserten radialen Ausgleichsverhalten des dualen Kupplungssystems führt. Insofern kann je nach Einsatz eine flexible Anpassung bei der Ausgestaltung und Auslegung des dualen Kupplungssystems erfolgen.

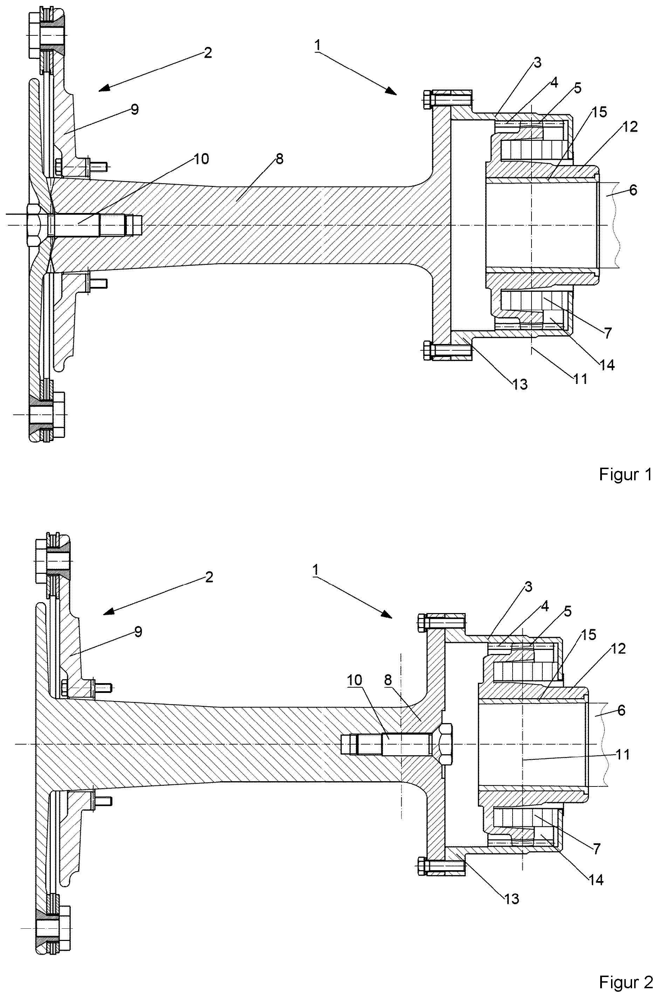

Nachfolgend wir die Erfindung anhand von zwei Ausführungsbeispielen näher erläutert. Die dazugehörigen Figuren 1 und 2 zeigen mögliche Ausgestaltungen des dualen Kupplungssystems im Querschnitt.

### Ausführungsbeispiel 1

In Fig. 1 ist ein duales Kupplungssystem für Schienenfahrzeuge mit zwei Kupplungseinheiten 1 und 2 dargestellt. Die beiden Kupplungseinheiten 1 und 2 sind zur Drehmomentübertragung mit einer Verbindungswelle 8 verbunden, wobei die erste Kupplungseinheit 1 eine Zahnkupplung ist, die über eine Nabe 12 mit balliger Außenverzahnung 5 mit winkligem und axialem Ausgleichsvermögen mit der Antriebswelle 6 über ein Sicherungselement 15 in Form einer mit verpressten Überlastbuchse verbunden ist. Die Antriebswelle 6 steht mit einem Motor (nicht gezeigt) in Verbindung und wird von diesem angetrieben.

Die ballige Außenverzahnung 5 der ersten Kupplungseinheit 1 steht mit der Innenverzahnung 4 der tauschbaren Hülse 3 in Eingriff. Die Hülse 3 weist einen Außendurchmesser von 245mm auf und ist in einem Motortunnel des Motors (nicht gezeigt) integriert.

Die als Verbindungswelle ausgebildete Welle 8 ist auf der Antriebsseite mit der tauschbaren ersten Kupplungseinheit 1 über die ausgebildete Flanschverbindung 12 mit der Hülse 3 verbunden.

Am anderen Ende der Verbindungswelle 8 ist eine drehsteife und biegeelastische Lamellenkupplung als zweite Kupplungseinheit 2 angeordnet und mittels zentralem Verbindungselement 10, die eine Zentralschraube ist, mit der Verbindungswelle 8 lösbar verbunden.

Die Lamellenkupplung 2 ist mit dem zur Zahnkupplung 1 gerichteten Koppelelement 9 sternförmig über insgesamt sechs Verbindungsstellen verbunden, wobei das Koppelelement 9 derart ausgebildet ist, dass es über eine Stirnverzahnung mit einem Getriebeaggregat, dass um die Verbindungswelle 8 angeordnet werden kann, verbunden werden kann.

Die erste Kupplungseinheit 1 mit Nabe 12 und balliger Außenverzahnung 5 ist von der Hülse 3 umgeben.

Zur Abdichtung gegen Verunreinigungen ist bei der ersten Kupplungseinheit 1 in einem zwischen der balligen Außenverzahnung 5 und der Nabe 12 ausgebildetem Freiraum 14 mittig im Bereich der Zahnmittenebene 11 der in Eingriff stehenden balligen Außenverzahnung 5 ein elastisches Abdichtelement 7 vorhanden, dass durch eine Stegverbindung mit der Hülse 3 und eine Schraubverbindung mit der Nabe 12 im Bereich im Freiraum 14 fixiert ist.

Das in Fig. 1 gezeigte duale Kupplungssystem kann in einem Schienenfahrzeug eingesetzt werden und ermöglicht über die Zahnkupplung 1 ein verbessertes axiales Verlagerungsverhalten und über die Lamellenkupplung 2 einen verbessertes Winkelausgleichsverhalten mit zugleich radialem Ausgleichsverhalten bei vergrößerter Stützweite.

### Ausführungsbeispiel 2

In Fig. 2 ist eine weitere Ausgestaltungsmöglichkeit des dualen Kupplungssystems für Schienenfahrzeuge mit zwei Kupplungseinheiten 1 und 2 dargestellt. Die beiden Kupplungseinheiten 1 und 2 sind zur Drehmomentübertragung mit einer Verbindungswelle 8 verbunden, wobei die erste Kupplungseinheit 1 eine Zahnkupplung ist, die über eine Nabe 12 mit balliger Außenverzahnung 5 mit winkligem und axialem Ausgleichsvermögen mit der Antriebswelle 6 über ein Sicherungselement 15 in Form einer mit verpressten Überlastbuchse verbunden ist. Die Antriebswelle 6 steht mit einem Motor (nicht gezeigt) in Verbindung und wird von diesem angetrieben.

Die ballige Außenverzahnung 5 der ersten Kupplungseinheit 1 steht mit der Innenverzahnung 4 der tauschbaren Hülse 3 in Eingriff. Die Hülse 3 weist einen Außendurchmesser von 245mm auf und ist in einem Motortunnel des Motors (nicht gezeigt) integriert.

Die Lamellenkupplung 2 ist mit dem zur Zahnkupplung 1 gerichteten Koppelelement 9 sternförmig über insgesamt sechs Verbindungsstellen verbunden, wobei das Koppelelement 9 derart ausgebildet ist, dass es über eine Stirnverzahnung mit einem Getriebeaggregat, dass um die Verbindungswelle 8 angeordnet werden kann, verbunden werden kann.

Die Verbindungswelle 8 ist als integraler Bestandteil der zweiten Kupplungseinheit 8 ausgebildet und erstreckt sich aus der zweiten Kupplungseinheit 2 direkt in Richtung der ersten Kupplungseinheit 1 bis unmittelbar zur Flanschverbindung 13.

Die erste Kupplungseinheit 1 mit Nabe 12 und balliger Außenverzahnung 5 ist von der Hülse 3 umgeben.

Zur Abdichtung gegen Verunreinigungen ist bei der ersten Kupplungseinheit 1 in einem zwischen der balligen Außenverzahnung 5 und der Nabe 12 ausgebildetem Freiraum 14 mittig im Bereich der Zahnmittenebene 11 der in Eingriff stehenden balligen Außenverzahnung 5 ein elastisches Abdichtelement 7 vorhanden, dass durch eine Stegverbindung mit der Hülse 3 und eine Schraubverbindung mit der Nabe 12 im Bereich im Freiraum 14 fixiert ist.

Aufgrund dessen, dass die Verbindungswelle 8 ein integraler Bestandteil der zweiten Kupplungseinheit 2 ist, kann eine zusätzliche Verbindungsstelle des zweiten Endbereiches der Verbindungswelle 8 und der zweiter Kupplungseinheit 2 mit zentralem Verbindungselement 10 entfallen.

Das in Fig. 2 gezeigte duale Kupplungssystem kann in einem Schienenfahrzeug eingesetzt werden und ermöglicht über die Zahnkupplung 1 ein verbessertes axiales Verlagerungsverhalten und über die Lamellenkupplung 2 einen verbessertes Winkelausgleichsverhalten mit zugleich radialem Ausgleichsverhalten bei vergrößerter Stützweite.

### Bezugszeichenliste

1 - erste Kupplungseinheit
2 - zweite Kupplungseinheit
3 - Hülse
4 - Innenverzahnung
5 - ballige Außenverzahnung
6 - Antriebswelle
7 - Abdichtelement
8 - Verbindungswelle
9 - Koppelelement
10 - Zentrales Verbindungselement
11 - Zahnmittenebene
12 - Nabe
13 - Flanschverbindung
14 - Freiraum
15 - Sicherungselement

## Patentansprüche

1. Duales Kupplungssystem für den Antrieb von Schienenfahrzeugen,
**dadurch gekennzeichnet, dass**
eine einem Antriebsaggregat zugeordnete und Axialverlagerungen und Winkelversatz ausgleichende erste Kupplungseinheit (1), eine einem Getriebeaggregat zugeordnete und Winkelversatz ausgleichende zweite Kupplungseinheit (2), und eine zwischen der ersten und zweiten Kupplungseinheit (1, 2) angeordnete und mindestens einteilig ausgebildete Verbindungswelle (8), wobei die erste Kupplungseinheit (1) form- und/oder kraftschlüssig über eine Nabe (12) mit einer Antriebswelle (6) verbunden ist, wobei die Nabe (12) eine ballige Außenverzahnung (5) aufweist, die mit einer Innenverzahnung (4) einer Hülse (3) in Eingriff steht, wobei die Hülse (3) in einem ersten Endbereich mit der Verbindungswelle (8) kraft- und oder formschlüssig lösbar verbunden ist, und wobei die zweite Kupplungseinheit (2) gegenüberliegend der ersten Kupplungseinheit (1) in einem zweiten Endbereich der Verbindungswelle (8) angeordnet und mit dieser kraft- und/oder formschlüssig lösbar verbunden ist, wobei die zweite Kupplungseinheit (2) ein zur ersten Kupplungseinheit (1) gerichtetes Koppelelement (9) aufweist, das ein Anordnen und Koppeln eines Getriebeaggregates im Bereich der Verbindungswelle (8) zwischen der ersten und zweiten Kupplungseinheit (1, 2) ermöglicht.

2. Duales Kupplungssystem nach Anspruch 1, bei dem die erste Kupplungseinheit (1) eine Zahnkupplung ist.

3. Duales Kupplungssystem nach Anspruch 1, bei dem die zweite Kupplungseinheit (2) eine Ringscheibenkupplung, eine Keilpaketringkupplung, ein Keilpaketkupplung, eine Laschenkupplung, eine Lenkerkupplung oder Stahl-Lamellenkupplung ist.

4. Duales Kupplungssystem nach Anspruch 1, bei dem ein Freiraum (14) zwischen Nabe (12) und balliger Außenverzahnung (5) ausgebildet ist.

5. Duales Kupplungssystem nach Anspruch 4, bei dem im ausgebildeten Freiraum (14) ein Abdichtelement (7) angeordnet ist.

6. Duales Kupplungssystem nach Anspruch 5, bei dem das Abdichtelement (7) im Freiraum (14) mittig im Bereich der Zahnmittenebene (11) der in Eingriff stehenden balligen Außenverzahnung (5) angeordnet ist.

7. Duales Kupplungssystem nach Anspruch 5, bei dem das Abdichtelement (7) ein Elastikelement oder Wellrohr ist, dass form-, stoff- und/oder kraftschlüssig mit der Hülse (3) und der Nabe (12) verbunden ist.

8. Duales Kupplungssystem nach Anspruch 1, bei dem die Hülse (3) mit dem ersten Endbereich der Verbindungswelle (8) durch eine Stirnverzahnung und/oder eine Flanschverbindung (13) verbunden ist.

9. Duales Kupplungssystem nach Anspruch 1, bei dem die zweite Kupplungseinheit (2) durch ein zentrales Verbindungselement (10) mit der Verbindungswelle (8) verbunden ist.

10. Duales Kupplungssystem nach Anspruch 1, bei dem die erste Kupplungseinheit (1) mindestens ein Sicherungselement (15) aufweist, das zwischen Nabe (12) und Antriebswelle (6) angeordnet ist.

11. Duales Kupplungssystem nach Anspruch 10, bei dem das Sicherungselement (15) als Überlastbuchse ausgebildet ist und mittels Pressverband mit der Nabe (12) und Antriebswelle (6) verbunden ist.

12. Duales Kupplungssystem nach Anspruch 1, bei dem im Bereich der Flanschverbindung (13) und/oder in der Nabe (12) mindestens ein elektrisches Isolationselement vorgesehen ist.

13. Duales Kupplungssystem nach Anspruch 1, bei dem die Verbindungswelle (8) integraler Bestandteil der zweiten Kupplungseinheit (2) ist, wobei der erste Endbereich der Verbindungswelle (8) kraft- und/oder formschlüssig mit der ersten Kupplungseinheit (1) über die Hülse (3) und/oder mit dem Flansch der Flanschverbindung (13) verbunden ist.

## Claims

1. Dual coupling system for the propulsion of rail vehicles,
**characterized in that**
a first coupling unit (1) associated with a drive assembly and compensating for axial displacements and angular misalignment, a second coupling unit (2) associated with a transmission assembly and compensating for angular misalignment, and a connecting shaft (8) arranged between the first and the second coupling unit (1, 2) and formed in at least one piece, wherein the first coupling unit (1) is form- and/or force-fittingly connected to a drive shaft (6) via a hub (12), wherein the hub (12) has a crowned external toothing (5) which engages with an internal toothing (4) of a sleeve (3), wherein the sleeve (3) in a first end region is force- and/or form-fittingly detachably connected to the connecting shaft (8), and wherein the second coupling unit (2) is arranged opposite the first coupling unit (1) in a second end region of the connecting shaft (8) and is forceand/or form-fittingly detachably connected thereto, wherein the second coupling unit (2) has a coupling element (9) which is directed toward the first coupling unit (1) and allows a transmission assembly to be arranged and coupled in the region of the connecting shaft (8) between the first and the second coupling unit (1, 2).

2. Dual coupling system according to claim 1, wherein the first coupling unit (1) is a tooth coupling.

3. Dual coupling system according to claim 1, wherein the second coupling unit (2) is a ring disk coupling, a wedge packet ring coupling, a wedge packet coupling, a strap coupling, a link coupling, or a steel multi-plate coupling.

4. Dual coupling system according to claim 1, wherein a free space (14) is formed between the hub (12) and the crowned external toothing (5).

5. Dual coupling system according to claim 4, wherein a sealing element (7) is arranged in the formed free space (14).

6. Dual coupling system according to claim 5, wherein the sealing element (7) is arranged in the free space (14) centrally in the region of the tooth center plane (11) of the engaged crowned external toothing (5).

7. Dual coupling system according to claim 5, wherein the sealing element (7) is an elastic element or corrugated tube which is form- and/or force-fittingly connected and/or materially bonded to the sleeve (3) and the hub (12).

8. Dual coupling system according to claim 1, wherein the sleeve (3) is connected to the first end region of the connecting shaft (8) by a spur toothing and/or a flange connection (13).

9. Dual coupling system according to claim 1, wherein the second coupling unit (2) is connected to the connecting shaft (8) by a central connecting element (10).

10. Dual coupling system according to claim 1, wherein the first coupling unit (1) has at least one securing element (15) which is arranged between the hub (12) and the drive shaft (6).

11. Dual coupling system according to claim 10, wherein the securing element (15) is designed as an overload bushing and is connected to the hub (12) and the drive shaft (6) by means of a press fit.

12. Dual coupling system according to claim 1, wherein at least one electrical insulation element is provided in the region of the flange connection (13) and/or in the hub (12).

13. Dual coupling system according to claim 1, wherein the connecting shaft (8) is an integral part of the second coupling unit (2), wherein the first end region of the connecting shaft (8) is force- and/or form-fittingly connected to the first coupling unit (1) via the sleeve (3) and/or to the flange of the flange connection (13).

## Revendications

1. Système d'accouplement double pour l'entraînement de véhicules ferroviaires,
**caractérisé en ce que**
une première unité d'accouplement (1) associée à un groupe d'entraînement et compensant des déplacements axiaux et des décalages angulaires, une seconde unité d'accouplement (2) associée à un groupe de transmission et compensant des décalages angulaires, et un arbre de transmission (8) disposé entre la première et la seconde unité d'accouplement (1, 2) et réalisé au moins d'une seule pièce, dans lequel la première unité d'accouplement (1) est reliée par complémentarité de forme et/ou par adhérence à un arbre d'entraînement (6) par l'intermédiaire d'un moyeu (12), dans lequel le moyeu (12) présente une denture extérieure bombée (5) qui est en prise avec une denture intérieure (4) d'un manchon (3), dans lequel le manchon (3) est relié de manière amovible, par complémentarité de forme et/ou par adhérence, à l'arbre de transmission (8) dans une première zone d'extrémité, et dans lequel la seconde unité d'accouplement (2) est disposée en face de la première unité d'accouplement (1) dans une seconde zone d'extrémité de l'arbre de transmission (8) et est reliée de manière amovible, par complémentarité de forme et/ou par adhérence, à celui-ci, dans lequel la seconde unité d'accouplement (2) présente un élément d'accouplement (9) orienté vers la première unité d'accouplement (1), lequel permet de disposer et d'accoupler un groupe de transmission dans la zone de l'arbre de transmission (8) entre la première et la seconde unité d'accouplement (1, 2).

2. Système d'accouplement double selon la revendication 1, dans lequel la première unité d'accouplement (1) est un accouplement à dents.

3. Système d'accouplement double selon la revendication 1, dans lequel la seconde unité d'accouplement (2) est un accouplement à disque annulaire, un accouplement annulaire à paquet de clavettes, un accouplement à paquet de clavettes, un accouplement à languettes, un accouplement à bras ou un accouplement à disques en acier.

4. Système d'accouplement double selon la revendication 1, dans lequel un espace libre (14) est réalisé entre le moyeu (12) et la denture extérieure bombée (5).

5. Système d'accouplement double selon la revendication 4, dans lequel un élément d'étanchéité (7) est disposé dans l'espace libre (14) réalisé.

6. Système d'accouplement double selon la revendication 5, dans lequel l'élément d'étanchéité (7) est disposé dans l'espace libre (14) au centre de la zone du plan médian de denture (11) de la denture extérieure bombée (5) qui est en prise.

7. Système d'accouplement double selon la revendication 5, dans lequel l'élément d'étanchéité (7) est un élément élastique ou un tube ondulé qui est relié par complémentarité de forme, de matière et/ou par adhérence au manchon (3) et au moyeu (12).

8. Système d'accouplement double selon la revendication 1, dans lequel le manchon (3) est relié à la première zone d'extrémité de l'arbre de transmission (8) par une denture frontale et/ou une liaison à bride (13).

9. Système d'accouplement double selon la revendication 1, dans lequel la seconde unité d'accouplement (2) est reliée à l'arbre de transmission (8) par un élément de liaison central (10).

10. Système d'accouplement double selon la revendication 1, dans lequel la première unité d'accouplement (1) présente au moins un élément de sécurité (15) qui est disposé entre le moyeu (12) et l'arbre d'entraînement (6).

11. Système d'accouplement double selon la revendication 10, dans lequel l'élément de sécurité (15) est réalisé sous forme de douille de surcharge et est relié au moyeu (12) et à l'arbre d'entraînement (6) au moyen d'un joint à ajustement serré.

12. Système d'accouplement double selon la revendication 1, dans lequel au moins un élément d'isolation électrique est prévu dans la zone de la liaison à bride (13) et/ou dans le moyeu (12).

13. Système d'accouplement double selon la revendication 1, dans lequel l'arbre de transmission (8) fait partie intégrante de la seconde unité d'accouplement (2), dans lequel la première zone d'extrémité de l'arbre de transmission (8) est reliée par adhérence et/ou par complémentarité de forme à la première unité d'accouplement (1) par l'intermédiaire du manchon (3) et/ou de la bride de la liaison à bride (13).
